(19) Europäisches Patentamt / European Patent Office / Office européen des brevets

(11) **EP 4 488 319 A1**

(12) **EUROPEAN PATENT APPLICATION**
published in accordance with Art. 153(4) EPC

(43) Date of publication:
**08.01.2025  Bulletin 2025/02**

(21) Application number: **23759992.3**

(22) Date of filing: **21.02.2023**

(51) International Patent Classification (IPC):
**C08J 5/04** (2006.01)  **D04H 1/4209** (2012.01)
**D04H 1/4242** (2012.01)  **D04H 1/64** (2012.01)
**D01F 9/22** (2006.01)

(52) Cooperative Patent Classification (CPC):
**C08J 5/04; D01F 9/22; D04H 1/4209; D04H 1/4242; D04H 1/64**

(86) International application number:
**PCT/JP2023/006286**

(87) International publication number:
**WO 2023/162991 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022  JP 2022028978**

(71) Applicant: **Toray Industries, Inc.**
**Tokyo 103-8666 (JP)**

(72) Inventors:
- **KAWAHARA, Kota**
  **Iyo-gun, Ehime 791-3193 (JP)**
- **NAKAYAMA, Yoshifumi**
  **Iyo-gun, Ehime 791-3193 (JP)**
- **MATSUTANI, Hiroaki**
  **Iyo-gun, Ehime 791-3193 (JP)**
- **HONMA, Masato**
  **Iyo-gun, Ehime 791-3193 (JP)**

(74) Representative: **Kador & Partner Part mbB**
**Corneliusstraße 15**
**80469 München (DE)**

(54) **MOLDING BASE MATERIAL, POROUS BODY, SKIN-CORE STRUCTURE AND STRUCTURAL MEMBER**

(57)    An object of the present invention is to provide a molding base material having high expandability, and to provide a fiber-reinforced resin porous material having excellent lightweight properties. The present invention to solve the above problem is a molding base material containing: a discontinuous reinforcing fiber; and a matrix resin, wherein the molding base material contains a discontinuous carbon fiber having a curved portion as the discontinuous carbon fiber, and the molding base material has expandability in a thickness direction at a glass transition temperature or a melting point of the matrix resin.

FIG.2

EP 4 488 319 A1

## Description

Field

The present invention relates to a molding base material, a porous material, a skin-core structure, and a structural member containing a fiber-reinforced resin.

Background

Fiber-reinforced resins excellent in lightweight properties and mechanical characteristics are used for various industrial applications. In recent years, there has been proposed a technique of impregnating a nonwoven fabric in which reinforcing fibers are dispersed with a matrix resin to form a molding base material, and performing molding while heating the molding base material to soften the matrix resin and expand, that is, form voids by using the reinforcing fibers as a support, thereby preparing a porous material excellent in lightweight properties and mechanical characteristics (Patent Literature 1).

Citation List

Patent Literature

Patent Literature 1: WO 2017/110528 A

Summary

Technical Problem

However, in the molding base material used in Patent Literature 1, since the bulk of the nonwoven fabric as a papermaking substrate is low, the raising force derived from the elastic modulus of the fiber is relatively small, and therefore the expandability of the molding base material is also relatively low. Therefore, in the porous material obtained from such a molding base material, deterioration of mechanical characteristics is minimized, but the effect of improving lightweight properties is limited.

The present invention has been made in view of the above problems, and an object of the present invention is to provide a molding base material having high expandability and a fiber-reinforced resin porous material having excellent lightweight properties.

Solution to Problem

The present invention to solve the above-described problem provides a molding base material including: a discontinuous reinforcing fiber; and a matrix resin. The molding base material contains a discontinuous carbon fiber having a curved portion as the discontinuous reinforcing fiber, and the molding base material has expandability in a thickness direction at a glass transition temperature or a melting point of the matrix resin.

Moreover, the present invention provides a fiber-reinforced resin porous material including: a discontinuous reinforcing fiber; and a matrix resin. The fiber-reinforced resin porous material contains a discontinuous carbon fiber having a curved portion as the discontinuous reinforcing fiber.

Furthermore, the present invention provides a skin-core structure including: the above-described porous material as a core layer; and a skin layer disposed on at least one surface of the core layer.

Furthermore, the present invention provides a structural member for an aircraft, a spacecraft, an automobile, a windmill, or an electronic device, the structural member including the above-described porous material.

Advantageous Effects of Invention

According to the present invention, a molding base material having high expandability can be obtained, and a fiber-reinforced resin porous material having excellent lightweight properties can be obtained by using the molding base material.

Brief Description of Drawings

FIG. 1 is a schematic view illustrating one embodiment of a molding base material containing no carbon fibers having a curved portion.

FIG. 2 is a schematic view illustrating one embodiment of a porous material containing no carbon fibers having a curved portion.

FIG. 3 is a schematic view illustrating one embodiment of a molding base material of the present invention containing carbon fibers having a curved portion.

FIG. 4 is a schematic view illustrating one embodiment of a porous material of the present invention containing carbon fibers having a curved portion.

FIG. 5 is a schematic view illustrating one embodiment of a carbon fiber having a curved portion.

FIG. 6 is a schematic view illustrating one embodiment of a carbon fiber having a branched curved portion.

FIG. 7 is a graph for explaining the undulation width of the fiber axis of a carbon fiber having a curved portion.

Description of Embodiments

Hereinafter, for easy understanding, the present invention will be described with reference to the drawings as appropriate, but the present invention is not limited by these drawings.

The molding base material of the present invention contains discontinuous reinforcing fibers and a matrix resin, and has expandability in the thickness direction at the glass transition temperature or melting point of the matrix resin. In the present specification, reinforcing fibers contained in the molding base material and the fiber-reinforced resin porous material may be simply referred to as "fibers". In addition, such a fiber-reinforced resin porous material may be simply referred to as "porous material".

Examples of the molding base material include base materials obtained by impregnating a nonwoven fabric composed of discontinuous reinforcing fibers with a matrix resin. In such a base material, the discontinuous reinforcing fibers deformed in the molding base material exhibit expandability in the thickness direction by the raising force to restore the shape before deformation when the matrix resin is softened. Here, in the present specification, when the matrix resin is a thermosetting resin, a temperature 30°C lower than the curing temperature of the thermosetting resin is used as the glass transition temperature.

The discontinuous reinforcing fiber may be in the form of a bundle or a single yarn. When the discontinuous reinforcing fiber is in the form of a bundle, the raising force in the thickness direction increases, and excellent elastic modulus and expandability in the thickness direction can be obtained. However, it is preferable that 50 to 100% of the discontinuous reinforcing fibers are dispersed in the form of a single yarn. When 50% or more of the discontinuous reinforcing fibers are dispersed in the form of a single yarn, the overlapping of the fibers increases to thereby increase the bulkiness in the thickness direction, so that high expandability can be exhibited. The ratio of the discontinuous reinforcing fibers dispersed in the form of a single yarn means the ratio (hereinafter, also referred to as fiber dispersion ratio) of single filaments having a two-dimensional contact angle of 1° or more with respect to the discontinuous reinforcing fibers freely selected in the molding base material. The two-dimensional contact angle is an angle formed between a single filament and another single filament in contact therewith. The two-dimensional contact angle is defined as an angle on the acute side within a range of 0 degrees or more and 90 degrees or less among angles formed by the single filaments in contact with each other. The observation method for measuring the two-dimensional contact angle is not particularly limited, and for example, a method of observing the orientation of the fibers from the surface of the component can be exemplified. In this case, the fibers are more easily observed by polishing the surface of the molding base material to expose the fibers. In addition, a method of photographing an image of the orientation of the fibers by performing X-ray CT transmission observation can also be exemplified. When the fibers have high X-ray transmittance, it is preferable to mix tracer fibers with the fibers or apply a tracer agent to the fibers because the fibers can be easily observed. When it is difficult to observe the fibers by the above method, a method can be exemplified in which the molding base material is heated at a high temperature by a heating furnace or the like to burn off the resin component, and then the orientation of the fibers is observed from the reinforcing fibers taken out with an optical microscope or an electron microscope. The fiber dispersion ratio is measured by the following procedure. That is, two-dimensional contact angles formed between a randomly selected single filament and all the single filaments that are in contact with the selected single filament are measured. This measurement is performed for 100 single filaments, and the fiber dispersion ratio is calculated from the ratio between the total number of all the single filaments for which the two-dimensional contact angle is measured and the number of single filaments having a two-dimensional contact angle of 1° or more.

The average two-dimensional orientation angle formed between the discontinuous reinforcing fibers is preferably 30 to 60 degrees. The two-dimensional orientation angle in the present invention is defined as an angle on the acute side within a range of 0 degrees or more and 90 degrees or less among angles formed by single filaments intersecting with each other. The term "intersect" means a state in which a reference single filament is observed to intersect with another single filament on a two-dimensional plane, and both single filaments are not necessarily in contact with each other. When the average two-dimensional orientation angle is 30 to 60 degrees, isotropy is imparted to the fiber orientation, whereby the overlapping of the fibers increases to thereby increase the bulkiness in the thickness direction, so that high expandability can be exhibited. In addition, isotropy can be imparted to the mechanical characteristics of the molded article. The average two-dimensional orientation angle is more preferably 35 to 55 degrees, and still more preferably 40 to 50 degrees. The observation method for measuring the two-dimensional orientation angle is not particularly limited, and for example, a method of observing the orientation of the fibers from the surface of the component can be exemplified. In this case, the fibers are more easily observed by polishing the surface of the molding base material to expose the fibers. In addition, a method of photographing an image of the orientation of the fibers by performing X-ray CT transmission observation can also be exemplified. When the fibers have high X-ray transmittance, it is preferable to mix tracer fibers with the fibers or apply a tracer agent to the fibers because the fibers can be easily observed. When it is difficult to observe the fibers by the above method, a method can be exemplified in which the molding base material is heated at a high temperature by a heating furnace or the like to burn off the resin component, and then the orientation of the fibers is observed from the reinforcing fibers taken out with an optical microscope or an electron microscope. The average two-dimensional orientation angle is measured by the following procedure. That is, an average value of two-dimensional orientation angles between a randomly selected single filament and all the single filaments that intersect with the selected single filament is measured. For example, when there are a large number of other single filaments intersecting with a certain single filament, an arithmetic average value obtained by randomly selecting 20 other single filaments intersecting with the certain single filament and measuring the same may be used as a substitute. This measurement is repeated five times in total using another single filament as a reference, and the arithmetic average value thereof is calculated as the average two-dimensional orientation angle.

The molding base material preferably contains 5 to 65 parts by mass of discontinuous reinforcing fibers and 35 to 95 parts by mass of a matrix resin. When the content of the discontinuous reinforcing fibers is 5 parts by mass or more and the content of the matrix resin is 95 parts by mass or less, there are sufficient overlaps between the discontinuous reinforcing fibers to increase the restoring force, so that high expandability can be exhibited. In addition, the reinforcing effect by the reinforcing fibers can be made sufficient when a molded article is formed, and excellent mechanical characteristics can be exhibited. When the content of the discontinuous reinforcing fibers is 65 parts by mass or less and the content of the matrix resin is 35 parts by mass or more, the reinforcing fibers can be sufficiently bonded to each other by the matrix resin, and the reinforcing effect by the reinforcing fibers can be made sufficient. When the content of the discontinuous reinforcing fibers is 5 parts by mass or more and the content of the matrix resin is 95 parts by mass or less, the expandability of the molding base material can be secured and the reinforcing effect can be achieved.

The bulk density of an assembly of discontinuous reinforcing fibers remaining after the molding base material of the present invention is heat-treated at 500°C for 3 hours in a nitrogen atmosphere is preferably 0.005 g/cm$^3$ or less. As described above, when the form of a fiber assembly having a low bulk density, that is, a bulky fiber assembly is employed, it is possible to greatly deform the carbon fiber having a curved portion when a molding base material is formed, and to exhibit high expandability. In addition, since the fiber assembly is bulky, the entire molding base material stably expands, and thus variation in expandability can be reduced. Here, heat treatment at 500°C for 3 hours in a nitrogen atmosphere is performed in order to remove components such as the matrix resin and take out only the fiber assembly.

The molding base material of the present invention contains discontinuous carbon fibers having a curved portion as the discontinuous reinforcing fibers. Hereinafter, in the present specification, the discontinuous carbon fiber having a curved portion may be simply referred to as "curved carbon fiber". The phrase "the discontinuous carbon fiber has a curved portion" means that a single filament of a carbon fiber itself has a portion intrinsically curved with a radius of curvature of 100 mm or less, and does not include a state in which a linear carbon fiber is merely bent by stress. That is, more specifically, the phrase "the discontinuous carbon fiber has a curved portion" means that the discontinuous carbon fiber is still curved when taken out from the molding base material and separated into single filaments. The single filaments of the discontinuous carbon fibers can be taken out at any timing, such as before use in the molding base material or after removal of the matrix resin from the molding base material. The method for removing the matrix resin may be, for example, burning or eluting, and specifically, a method of heat-treating the molding base material at 500°C for 3 hours in a nitrogen atmosphere.

The method for providing the carbon fiber with a curved portion is not particularly limited, and examples thereof include a method in which a fiber bundle of carbon fiber precursors is subjected to a twisting treatment during a calcination process of the carbon fiber to impart a curved shape.

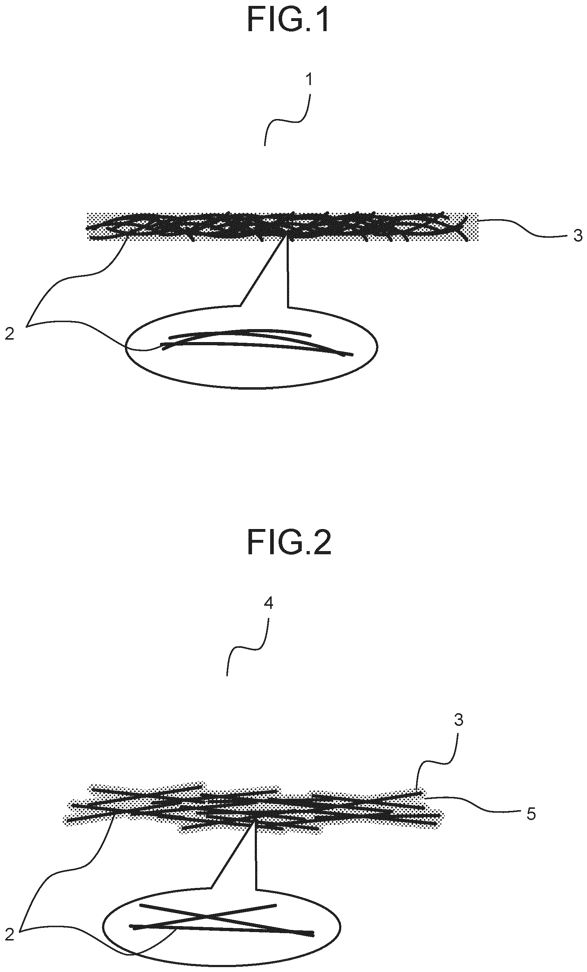

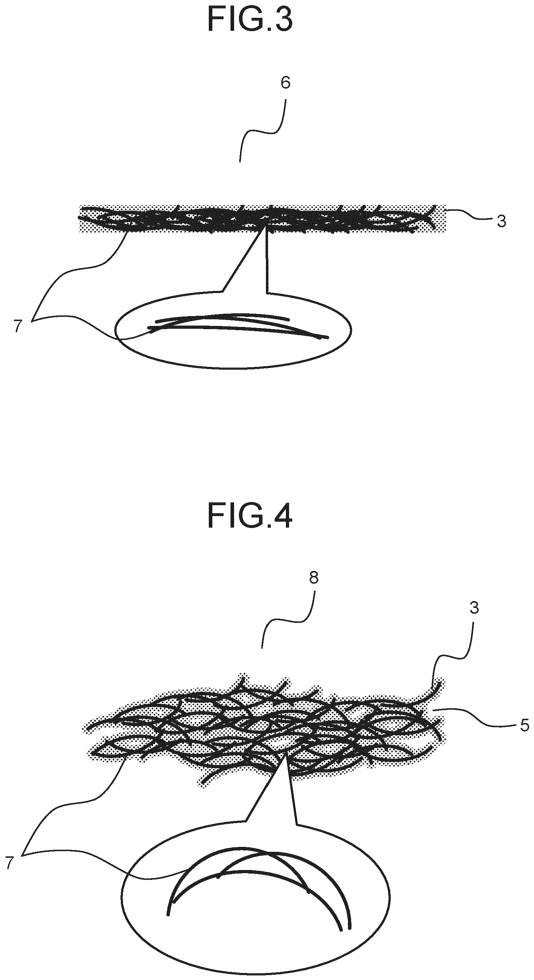

FIG. 1 is a schematic view illustrating a cross-sectional structure of one embodiment of a conventional molding base material containing no curved carbon fibers. FIG. 2 is a schematic view illustrating a cross-sectional structure of a porous material prepared using the molding base material. FIG. 3 is a schematic view illustrating a cross-sectional structure of one embodiment of the molding base material of the present invention containing curved carbon fibers. FIG. 4 is a schematic view illustrating a cross-sectional structure of a porous material prepared using the molding base material. In the case of a molding base material 1 containing no curved carbon fibers, as illustrated in FIG. 1, when the molding base material 1 is processed, linear discontinuous reinforcing fibers 2 are compressed in a deformed state. When the molding base material 1 is processed into a porous material 4, as illustrated in FIG. 2, the discontinuous reinforcing fibers 2 having been deformed in the molding base material 1 exhibit expandability due to the raising force that restores a linear shape when a matrix resin 3 is softened. However, since the deformation amount of the fiber is small and the elastic energy accumulated in the fiber is small, the degree of expandability is relatively low. On the other hand, in the case of a molding base material 6 containing discontinuous reinforcing fibers 7 having a curved portion, as illustrated in FIG. 3, the discontinuous reinforcing fibers 7 having a curved portion are compressed in a state in which the curved portion is deformed and the deformation amount of the fibers in the molding base material 6 increases, and thus large elastic energy is accumulated in the fibers. Therefore, when the molding base material 6 is processed into a porous material 8, as illustrated in FIG. 4, high expandability can be exhibited due to the restoring force of the discontinuous reinforcing fibers 7 having a curved portion. As a result of having high expandability, many voids are formed, and it is possible to provide a porous material having more excellent lightweight properties, and also improve the shapability of the molded article.

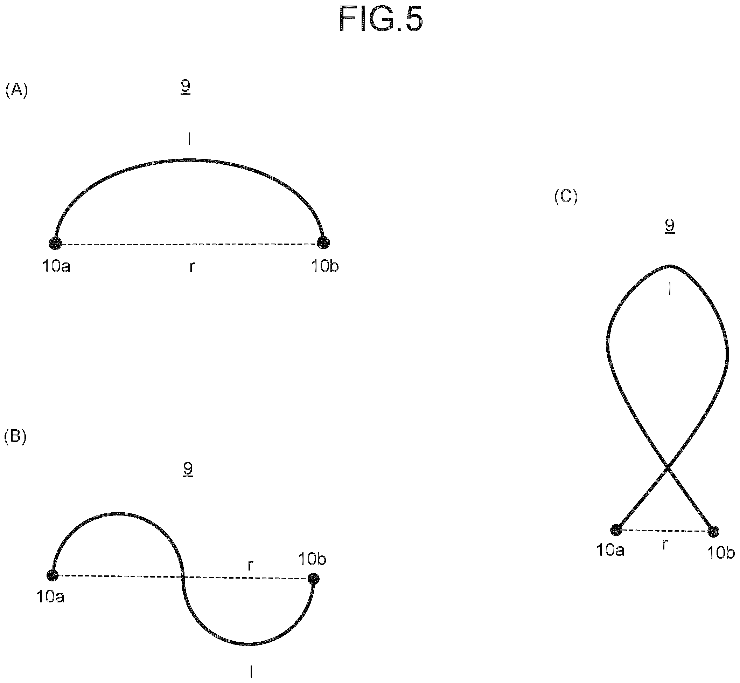

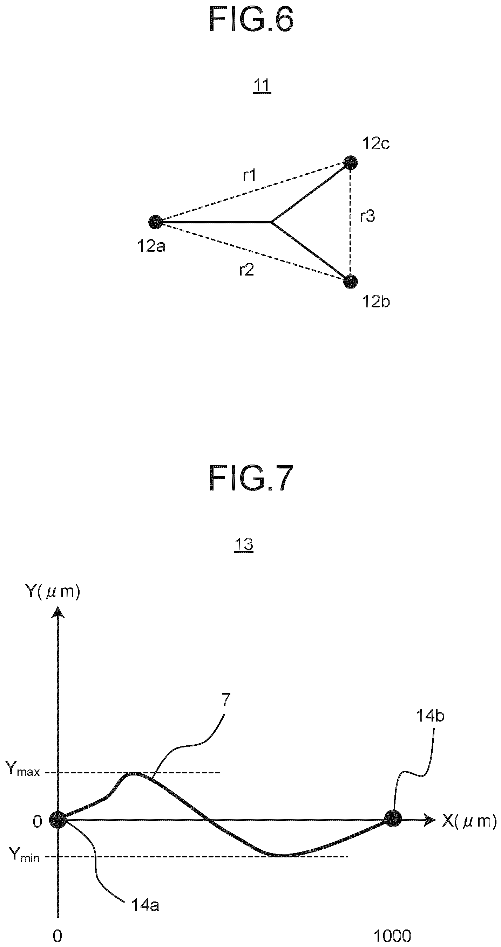

Examples of the shape of a discontinuous carbon fiber 7 having a curved portion include shapes illustrated in FIGS. 5(A) to 5(C). In addition, a branched shape as illustrated in FIG. 6 is also exemplified as the shape having a curved portion because the curved portion exists at the branch point. Note that the shape having a curved portion is not limited to these shapes.

The curved portion of the discontinuous carbon fiber having a curved portion preferably has a radius of curvature of 20 mm or less. As a result, the deformation amount of the curved portion in the molding base material increases to thereby increase the restoring force, and high expandability is exhibited. The radius of curvature of the curved portion is more preferably 10 mm or less, still more preferably 8 mm or less, and still even more preferably 5 mm or less. A portion having a different radius of curvature may be present in a single filament, and in this case, a portion having a radius of curvature of 100 mm or less may be present. As described above, the measurement timing is not limited as long as the fiber can be taken out as a single filament.

The overall curvature of the discontinuous carbon fiber having a curved portion is preferably 1 to 200%. When the overall curvature is 1% or more, the single filament has a large restoring force, and the molding base material can exhibit high expandability. When the overall curvature is 200% or less, entanglement between fibers can be suppressed, and high expandability can be exhibited. The overall curvature in the present invention is expressed by the following formula from a distance r between two ends of a fiber and a fiber length l.

$$\text{Overall curvature (\%)} = (l - r)/r \times 100$$

In the above formula, the "distance r between two ends of a fiber" means a linear distance obtained by taking out a single filament of a curved carbon fiber and connecting one end and the other end of the single filament by a straight line. The "fiber length l" means a length measured along a single filament between one end and the other end of the filament. As described above, the measurement timing is not limited as long as the fiber can be taken out as a single filament. When FIGS. 5(A) to 5(C) are taken as examples, a linear distance from one end 10a to the other end 10b of a curved single filament 9 is the distance (r) between two ends of a fiber, and a length along the filament from the one end 10a to the other end 10b is the fiber length (1). When a single filament has a branch or the like and has three or more ends, the fiber length is the entire length along the filament. When FIG. 6 is taken as an example, the fiber length is the sum of the length along the filament from an end 12a to an end 12b and the length along the filament from the branch point to an end 12c. The overall curvature in a case where the single filament has three or more ends may be calculated by a distance (any one of r1 to r3) between any two ends and the fiber length (1). The overall curvature is more preferably 1.5 to 180%, and still more preferably 2 to 150%.

In addition, the undulation width of the fiber axis of the discontinuous carbon fiber having a curved portion within a range of a linear distance of 1 mm is preferably 10 to 1,000 $\mu$m. When the undulation width is 10 $\mu$m or more, the curvature of the discontinuous carbon fiber is sufficiently large, and the molding base material can exhibit high expandability. When the undulation width is 1,000 $\mu$m or less, entanglement between fibers can be suppressed, and thus high expandability can be exhibited. The undulation width is measured by observing a single filament of a curved carbon fiber from a fiber axis direction and an orthogonal direction under an environment where no stress other than gravity is applied. In a fiber having a three-dimensional undulation, the fiber axis direction and the orthogonal direction are defined as follows. In a projection image on a horizontal plane of a single filament of curved carbon fiber left standing on the horizontal plane, a straight line connecting two points separated by 1 mm is defined as a virtual fiber axis at a site to be observed, and the vertical direction is defined as a direction orthogonal to the fiber axis direction. As shown in FIG. 7, the center of the observed single filament in the thickness direction is freely selected and defined as a start point (14a), another center of the single filament in the thickness direction away from the start point by a linear distance of 1 mm is defined as an end point (14b), the start point is defined as the origin in the XY coordinate plane located at the position where X = 0 $\mu$m and Y = 0 $\mu$m, and the end point is defined as a point on the X axis, that is, a point located at the position where X = 0 $\mu$m and Y = 1,000 $\mu$m. Among the values between a maximum value Ymax indicating the highest center of the single filament in the thickness direction on the Y coordinate and a minimum value Ymin indicating the lowest center of the single filament in the thickness direction on the Y coordinate, the undulation width is defined as a difference $\Delta$Y ($\mu$m) obtained by subtracting the minimum value Ymin ($\mu$m) from the maximum value Ymax ($\mu$m). The undulation width is measured for ten independent single filaments of curved carbon fiber randomly extracted, and an average value thereof is adopted. The undulation width is more preferably 12 to 950 $\mu$m, and still more preferably 15 to 900 $\mu$m.

The distance r between two ends of the curved carbon fiber is preferably 2 to 10 mm. When the distance r between two ends of the curved carbon fiber is 2 mm or more, the number of contact points between fibers increases to exhibit high expandability, and the reinforcing effect by the carbon fiber can be made sufficient when a porous material is formed, so that excellent mechanical characteristics can be imparted. When the distance r between two ends of the curved carbon fiber is 10 mm or less, not only the deformation amount of the single filament increases, but also entanglement between fibers is suppressed to exhibit high expandability, and carbon fibers are easily dispersed, so that a homogeneous molding base material and porous material can be obtained. The distance r between two ends of the curved carbon fiber is more preferably 3 mm or more and 8 mm or less. The distance r between two ends of the curved carbon fiber can be calculated as the average of the fiber lengths of 100 fibers randomly taken out from the curved carbon fibers and measured to the order of 100 $\mu$m.

The aspect ratio (l/d) between the fiber length (l) and the diameter (d) of the discontinuous carbon fiber having a curved portion is preferably 100 to 5,000. When the aspect ratio (l/d) is 100 or more, breakage at the time of fiber deformation can be suppressed to exhibit high expandability. When the aspect ratio (l/d) is too large, that is, the fiber is too thin, the elastic energy accumulated in the fiber is suppressed with respect to the same fiber deformation amount. When the aspect ratio (l/d) is 5,000 or less, the elastic energy is efficiently accumulated with respect to the fiber deformation amount, and thus high expandability can be exhibited. The aspect ratio (l/d) is more preferably 150 to 4,500, and still more preferably 200 to 4,000.

The molding base material of the present invention preferably contains 50 to 99% of discontinuous carbon fibers having a curved portion and 1 to 50% of linear discontinuous reinforcing fibers. The curved carbon fiber is relatively easily deformed in a plane observed from the thickness direction due to the curved portion thereof. On the other hand, the linear discontinuous reinforcing fiber is hardly deformed in the fiber axis direction, and thus can suppress the in-plane deformation of the molding base material. When the molding base material contains 1% or more of the linear discontinuous reinforcing fibers, the in-plane deformation of the curved carbon fiber is suppressed at the time of preparation or expansion of the molding base material, and as a result, high expandability can be exhibited. When the content of the linear discontinuous reinforcing fibers is 50% or less, the effect of increasing expansion by the curved carbon fibers can be made sufficient. The observation method for measuring the contents of the curved carbon fibers and the linear discontinuous reinforcing fibers is not particularly limited. A method of performing X-ray CT transmission observation and photographing an image of the orientation of the fibers can also be exemplified. The contents of the fibers can also be calculated by removing the matrix resin from the molding base material or the porous material and taking out the fibers. When it is difficult to measure the entire molding base material or the entire porous material, a value measured for 100 fiber samples randomly taken out without bias may be used.

Examples of the carbon fiber used as the discontinuous carbon fiber having a curved portion include PAN-based, rayon-based, lignin-based, and pitch-based carbon fibers. These fibers may be subjected to a surface treatment. Examples of the surface treatment include a treatment with a coupling agent, a treatment with a sizing agent, a treatment with a binder, and an adhesion treatment with an additive, in addition to a deposition treatment with a metal as a conductive material. These fibers may be used singly or in combination of two or more types thereof. Among them, PAN-based, pitch-based, and rayon-based carbon fibers excellent in specific strength and specific rigidity are preferably used, from the viewpoint of a weight reduction effect. From the viewpoint of enhancing conductivity, carbon fibers coated with a metal such as nickel, copper, or ytterbium can also be used. Among them, PAN-based carbon fibers excellent in mechanical characteristics such as strength and elastic modulus can be particularly preferably used.

Examples of the linear discontinuous reinforcing fiber include PAN-based, rayon-based, lignin-based, and pitch-based carbon fibers, fibers of metals such as aluminum, brass, and stainless steel, inorganic fibers such as graphite fibers, glass fibers, silicon carbide fibers, and silicon nitride fibers, and as organic fibers, fibers obtained by spinning resins, for example, polyolefin-based resins such as polyethylene and polypropylene, polyamide-based resins such as nylon 6, nylon 66, and aromatic polyamide, polyester-based resins such as polyethylene terephthalate, polybutylene terephthalate, and liquid crystal polyester, polyaryletherketone-based resins such as polyether ketone, polyether sulfone, polyarylene sulfide, and fluororesin.

The discontinuous carbon fiber of the present invention is preferably contained in a papermaking form. When the discontinuous carbon fiber is in a papermaking form where fibers are dispersed in water to form a papermaking substrate, the discontinuous carbon fibers can be uniformly dispersed, and the overlap between fibers increases. As a result, the deformation amount of the curved portion of the discontinuous carbon fiber in the molding base material increases, and the molding base material can exhibit high expandability.

As the matrix resin used for the molding base material of the present invention, either a thermoplastic resin or a thermosetting resin may be used, or a resin obtained by blending both resins may also be used. Examples of the thermoplastic resin include crystalline resins such as "polyethylene terephthalate (PET), polybutylene terephthalate (PBT), polytrimethylene terephthalate (PTT), polyethylene naphthalate (PEN), polyesters such as liquid crystal polyester, polyolefins such as polyethylene (PE), polypropylene (PP), and polybutylene, polyoxymethylene (POM), polyamide (PA), polyarylene sulfides such as polyphenylene sulfide (PPS), polyketone (PK), polyether ketone (PEK), polyether ether ketone (PEEK), polyether ketone ketone (PEKK), polyether nitrile (PEN), fluorine-based resins such as polytetrafluoroethylene, and liquid crystal polymer (LCP)", amorphous resins such as "styrene-based resins, and polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyethersulfone, and polyarylate (PAR)", phenol resins, phenoxy resins, thermoplastic elastomers such as polystyrene-based, polyolefin-based, polyurethane-based, polyester-based, polyamide-based, polybutadiene-based, polyisoprene-based, fluorine-based resins, and acrylonitrile-based elastomers, and thermoplastic resins selected from copolymers and modified products thereof. Among them, amorphous resins such as polycarbonate and styrene-based resins are preferable from the viewpoint of surface appearance, polyether ether ketone is preferable from the viewpoint of continuous use temperature, and fluorine-based resins are preferably used from the viewpoint of chemical resistance. The matrix resin of the present invention is preferably at least one thermoplastic resin selected from polyolefin, polyamide, polyarylene sulfide, polyether ether ketone, polyether ketone ketone, polycarbonate, and polyetherimide. Specifically, polyolefins are preferable from the viewpoint of lightweight properties, polyamides are preferable from the viewpoint of strength, and polyarylene sulfide, polyether ether ketone, polyether ketone ketone, polycarbonate and polyetherimide are preferably used from the viewpoint of heat resistance.

As the thermosetting resin, at least one thermosetting resin selected from an unsaturated polyester resin, a vinyl ester resin, an epoxy resin, a phenol resin, an acrylic resin, a urea resin, a melamine resin, and a thermosetting polyimide resin is preferable. These may be copolymers, modified products, and resins obtained by blending these. When the above thermosetting resins are used, breakage of the fiber is suppressed during impregnation into the discontinuous carbon fiber, and the thermosetting resin is sufficiently softened during expansion to exhibit high expandability.

The matrix resin may contain impact resistance improvers such as elastomers or rubber components, other fillers or additives as long as the object of the present invention is not impaired. Examples of the filler and the additive include an inorganic filler, a flame retardant, a conductivity imparting agent, a crystal nucleating agent, an ultraviolet absorber, an antioxidant, a damping agent, an antibacterial agent, a pest control agent, a deodorant, a coloring inhibitor, a heat stabilizer, a release agent, an antistatic agent, a plasticizer, a lubricant, a coloring agent, a pigment, a dye, a foaming agent, a foam inhibitor, and a coupling agent.

The thickness of the molding base material of the present invention at the glass transition temperature or melting point of the matrix resin is preferably three times or more the thickness at room temperature. When the thickness at the glass transition temperature or melting point is three times or more, the shapability of the porous material is improved, and excellent lightweight properties can be imparted. Even in a case where a porous material is molded with less than three-time expansion in thickness, for example, two-time expansion in thickness and used, the porous material can be molded with a high expansion force because it has expandability of three times or more, and thus has excellent surface quality, and as a result, excellent mechanical characteristics can be imparted. In the molding base material of the present invention, the discontinuous carbon fiber has a curved portion, so that high expandability can be exhibited. The expansion ratio of the molding base material in the thickness direction can be determined from the thickness of the molding base material before expansion (at room temperature) and the thickness of the porous material after expansion at the glass transition temperature or melting point of the matrix resin by the following formula.

(Expansion ratio of molding base material in thickness direction) = (thickness of porous material after expansion [mm])/(thickness of molding base material before expansion [mm]) $\times$ 100

The thicknesses of the molding base material and the porous material can be determined as an arithmetic average value of thicknesses measured at five points randomly extracted. The thickness of the molding base material at the glass transition temperature or melting point of the matrix resin is more preferably five times or more, and still more preferably eight times or more the thickness at room temperature.

The coefficient of variation (CV) of the thickness at three-time expansion, which indicates variation in the expandability of the molding base material, is preferably 0 to 10%. When the coefficient of variation (CV) of the thickness at three-time expansion is 10% or less, generation of local fragile portions can be suppressed, and homogeneous and excellent mechanical characteristics can be imparted to the porous material after molding. In the molding base material of the present invention, the discontinuous carbon fiber has a curved portion, whereby the molding base material exhibits expandability by the restoring force derived from the shape of the discontinuous carbon fiber, and thus uniform expansion can be achieved. The coefficient of variation of the thickness at three-time expansion is calculated by the following formula from thicknesses $t_i$ ($i$ = 1 to 5) measured at five points randomly extracted from the porous material that has been expanded three times, and the average value $T$ thereof.

$$T = \frac{1}{5}\sum_{i=1}^{5} t_i$$

$$\text{Coefficient of variation}(\%) = \frac{100}{T} \sqrt{\frac{1}{5}\sum_{i=1}^{5}(t_i - T)^2}$$

The length of the molding base material (the length of each side of the molding base material) at the glass transition temperature or melting point of the matrix resin is preferably 0.9 to 1.2 times that at room temperature. When the length of the molding base material is within the above range, the fiber structure of the molded article at the time of expansion and after expansion is not significantly changed, and excellent expandability and mechanical characteristics can be exhibited.

In the molding base material of the present invention, the contact points between the discontinuous reinforcing fibers are preferably coated with a binder component. In a fiber assembly composed of discontinuous reinforcing fibers, the handleability of the fiber assembly is improved by coating and bonding the intersections of the discontinuous reinforcing fibers with a binder component. When the molding base material of the present invention is produced by resin impregnation or the like, the fiber structure in the fiber assembly is maintained, so that the molding base material can exhibit high expandability, and further, a porous material having excellent mechanical characteristics when formed into a molded article is can be obtained. The phrase "the contact points between the discontinuous reinforcing fibers are coated with the binder component" typically means a state in which 20% or more of all the contact points are coated with the binder component when the contact points where the discontinuous reinforcing fibers intersect in the molding base material are observed with an optical microscope or an electron microscope. That is, even when a resin such as a sizing agent is present on the fiber surface, in a case where the contact points are not coated, the effect of binding fibers to each other is not achieved, which is different from the state in which the fibers are bound by the binder resin. The ratio of the coated contact points can be calculated by observing 100 freely selected contact points between the discontinuous reinforcing fibers in the molding base material and determining the number of coated contact points from among them.

Examples of the binder component include resins such as an acrylic polymer, a vinyl polymer, polyurethane, polyamide, and polyester. The binder component may be used singly or in combination of two or more types thereof. A fiber assembly having excellent strength can be obtained by using these binder components, and thus the fiber structure in the molding base material can be maintained. The binder component preferably has one or more reactive functional groups selected from an amino group, an epoxy group, a carboxyl group, an oxazoline group, a carboxylic acid base, and an acid anhydride group, and may have two or more reactive functional groups. Among them, a binder component having an amino group and/or an oxazoline group is more preferable.

In the present invention, the glass transition temperature of the binder component to be imparted to the discontinuous reinforcing fiber is preferably lower than the melting point of the matrix resin. As a result, when the molding base material expands, that is, when the molding base material is heated to a temperature equal to or higher than the melting point of the matrix resin, the binder component is heated to a temperature equal to or higher than the glass transition temperature and softens. Therefore, the binder component hardly inhibits restoration of the shape of the discontinuous reinforcing fiber, and the molding base material can exhibit high expandability.

The method for applying the binder component is not particularly limited, and examples thereof include a method of using an aqueous solution, an emulsion, a suspension or the like containing a binder component (hereinafter, referred to as a "binder liquid") as a dispersion medium at the time of dispersing the discontinuous reinforcing fibers, a method of immersing, in a binder liquid, a nonwoven fabric prepared by dispersing the discontinuous reinforcing fibers, and a method of applying a binder liquid by showering.

Another aspect of the present invention is a fiber-reinforced resin porous material containing a discontinuous reinforcing fiber and a matrix resin, wherein the fiber-reinforced resin porous material contains a discontinuous carbon fiber having a curved portion as the discontinuous reinforcing fiber. Examples of the method for preparing the porous material of the present invention include a method of applying a matrix resin to a nonwoven fabric of discontinuous reinforcing fibers, in addition to the above-described method of thermally expanding the molding base material of the present invention. When the discontinuous carbon fiber has a curved portion, a space is created, so that the porous material can contain a large number of voids. Thus, a porous material having excellent lightweight properties can be obtained.

The porous material of the present invention preferably has expandability in the thickness direction at the glass transition temperature or melting point of the matrix resin. When the porous material has a further expandable potential, a porous material having excellent quality can be obtained. When the matrix resin is a thermosetting resin, and has been cured in the porous material, the glass transition temperature is defined as the glass transition temperature after curing.

FIG. 4 is a schematic view illustrating a cross-sectional structure of one embodiment of the porous material of the present invention. The porous material 8 further includes voids 5 in addition to the discontinuous carbon fiber 7 having a curved portion and the matrix resin 3. The porous material 8 of the present invention typically has a form in which at least a part of the contact points where the discontinuous reinforcing fibers intersect each other is bonded with a matrix resin, and a large number of portions surrounded by the discontinuous reinforcing fibers and the matrix resin, where neither the discontinuous reinforcing fiber nor the matrix resin is present, are scattered in the porous material as voids. When the porous material includes such voids, the specific gravity can be reduced, and excellent mechanical characteristics can be exhibited while being lightweight. The content $V_p$ (vol%) of voids in the porous material is calculated by the following formula from the volume $V_{NV}$ (cm$^3$) of the molding base material in a state of including no voids and the volume $V_V$ (cm$^3$) of the porous material prepared by expanding the molding base material.

$$V_p = 100 - V_{NV}/V_V \times 100$$

The volume $V_{NV}$ of the molding base material in a state of including no voids can also be determined by measuring the mass $M_V$ (g) of the porous material, then removing the resin component of the porous material by an appropriate method, measuring the mass $M_f$ (g) of all the remaining fibers, and calculating by the following formula from the density $\rho_f$ of the fiber and the density $\rho_m$ of the matrix resin.

$$V_{NV} = M_f/\rho_f + (M_V - M_f)/\rho_m$$

The content of voids in the porous material of the present invention is preferably 20 vol% or more and 99 vol% or less. When the content of voids is 20 vol% or more, the specific gravity of the porous material decreases, and sufficient lightweight properties can be obtained. On the other hand, when the content of voids is 99 vol% or less, the reinforcing effect by fibers can be made sufficient, and excellent mechanical characteristics can be imparted. The content of voids is more preferably 50 vol% or more and 95 vol% or less.

The porous material of the present invention preferably has an out-of-plane compressive modulus of 1 to 500 MPa. When the out-of-plane compressive modulus is 1 MPa or more, the use as a structure that bears a load is less limited, and the porous material can be used as a lightweight structure. The out-of-plane compressive modulus of 500 MPa or less means that sufficient voids are indirectly present, and sufficient lightweight properties can be imparted to the porous material.

When the density of the porous material of the present invention is denoted by $\rho$ and the flexural modulus thereof is denoted by E, the specific flexural modulus of the porous material represented by $E^{1/3}/\rho$ is preferably 1 to 30 GPa$^{1/3}\cdot$cm$^3$/g. When the specific flexural modulus is 1 GPa$^{1/3}\cdot$cm$^3$/g or more, the porous material is lightweight but excellent in flexural modulus. The specific flexural modulus of 30 GPa$^{1/3}\cdot$cm$^3$/g or less means that the porous material has a flexural modulus to such an extent that the porous material can be formed as a structure while being sufficiently lightweight, and is preferable because there are few restrictions on the use of the porous material as a structure.

Another aspect of the present invention is a skin-core structure including the above-described porous material as a core layer, and a skin layer disposed on at least one surface of the core layer. The skin-core structure of the present invention can exhibit rigidity, strength, and the like that cannot be exhibited only by the porous material of the present invention due to the skin layer on the surface. The skin layer is preferably a fiber-reinforced resin containing continuous reinforcing fibers. The fiber-reinforced resin containing continuous reinforcing fibers has excellent strength and rigidity, and thus can impart excellent mechanical characteristics to the skin-core structure. In addition, since the porous material of the present invention is also a type of fiber-reinforced resin, the difference in characteristics such as thermal expandability between the porous material and the skin layer is relatively small. Thus, the porous material is excellent in bondability and easily integrated as a skin-core structure. In addition, since at least a part of the skin-core structure is composed of the porous material of the present invention, excellent lightweight properties can be imparted to the skin-core structure.

Examples of applications of the porous material or skin-core structure of the present invention include structural members for aircraft, spacecraft, automobiles, windmills, electronic devices, and the like. The porous material of the present invention has excellent lightweight properties and mechanical characteristics, and thus can be expected to improve performance such as improvement in fuel efficiency and increase in payload of aircraft, spacecraft, and automobiles. Note that the spacecraft in the present specification includes machines such as an artificial satellite used outside the atmosphere and transport devices such as a rocket used for transportation outside the atmosphere. In addition, when the porous material of the present invention is used in a windmill, the length of the blade can be increased, and improvement in power generation efficiency can be expected. As an electronic device housing, an excellent balance between lightweight properties and rigidity required for shape maintenance are achieved, and thus improvement in portability of the electronic device housing can be expected.

[Examples]

Hereinafter, the present invention will be described in more detail with reference to Examples, but the scope of the present invention is not limited to these Examples.

(1) Measurement of mass content $W_A$ of discontinuous carbon fibers having curved portion and mass content $W_C$ of linear discontinuous reinforcing fibers in discontinuous reinforcing fibers

When a nonwoven fabric is prepared at a stage before preparation of the molding base material, discontinuous carbon fibers having a curved portion and linear discontinuous reinforcing fibers are charged into a dispersion tank. The mass contents were calculated by the following formula from the masses of charged fibers $M_A$ (g) and $M_C$ (g) at this time.

$$W_A = M_A/(M_A + M_C) \times 100$$

$$W_C = M_C/(M_A + M_C) \times 100$$

(2) Measurement of mass contents of discontinuous reinforcing fibers and matrix resin in molding base material

The molding base material is prepared by stacking a resin sheet and a fiber mat. The mass content of the discontinuous reinforcing fibers and the mass content of the matrix resin in the molding base material were calculated by the following formula from the basis weight Wr ($g/m^2$) of the resin sheet, the number Nr of stacked discontinuous reinforcing fibers, the basis weight Wf ($g/m^2$) of the discontinuous reinforcing fibers in the fiber mat, and the number Nf of stacked fiber mats.

Mass content (parts by mass) of discontinuous reinforcing fibers = (Wf $\times$ Nf)/{(Wf $\times$ Nf) + (Wr $\times$ Nr)} $\times$ 100

Mass content (parts by mass) of matrix resin = (Wr $\times$ Nr)/{(Wf $\times$ Nf) + (Wr $\times$ Nr)} $\times$ 100

(3) Measurement of expansion ratio of molding base material

The expansion ratio of the molding base material in the thickness direction was determined by the following formula from the thickness of the molding base material before expansion (at room temperature) and the thickness of the porous material after expansion by softening the matrix resin.

(Expansion ratio of molding base material in thickness direction) = (thickness of porous material after expansion [mm])/(thickness of molding base material before expansion [mm]) $\times$ 100

In a case where the matrix resin is a thermoplastic resin, softening the matrix resin means heating the molding base material at the melting point of the thermoplastic resin for 10 minutes. In a case where the matrix resin is a thermosetting resin, softening the matrix resin means heating the molding base material at a temperature 30°C lower than the curing temperature of the thermosetting resin for 10 minutes. The thicknesses of the molding base material and the porous material were each determined as an arithmetic average value of thicknesses measured at five points randomly extracted.

(4) Measurement of coefficient of variation (CV) of thickness at three-time expansion

The coefficient of variation (CV) of the thickness of the molding base material at three-time expansion was determined by the following formula from the thicknesses ti (i = 1 to 5) measured at five points randomly extracted from the porous material after the molding base material was expanded three times in thickness by softening the matrix resin, and the average value T thereof.

$$T = \frac{1}{5} \sum_{i=1}^{5} t_i$$

$$\text{Coefficient of variation}(\%) = \frac{100}{T} \sqrt{\frac{1}{5} \sum_{i=1}^{5} (t_i - T)^2}$$

When the molding base material was expanded three times in thickness, the molding base material was disposed in a mold provided with a space having a thickness three times the thickness of the molding base material; then, in a case where the matrix resin was a thermoplastic resin, the molding base material was heated at the melting point of the thermoplastic resin for 10 minutes, and in a case where the matrix resin was a thermosetting resin, the molding base material was heated at a temperature 30°C lower than the curing temperature of the thermosetting resin for 10 minutes; and the mold was then cooled to room temperature. Further, the thickness of the porous material taken out from the mold after cooling was measured.

(5) Measurement of density $\rho$ of porous material

A test piece was cut out from the porous material, and the apparent density of the porous material was measured with reference to JIS K7222 (2005). The dimensions of the test piece were 100 mm in length and 100 mm in width. The length, width, and thickness of the test piece were measured with a micrometer, and the volume V ($mm^3$) of the test piece was calculated from the obtained values. In addition, the mass M (g) of the cut test piece was measured with an electronic balance. The density $\rho$ of the porous material was calculated by substituting the obtained mass M and volume V into the following formula.

$$\rho\,(g/cm^3) \;=\; 10^3 \;\times\; M/V$$

(6) Flexural test of porous material

A test piece was cut out from the porous material, and the flexural modulus was measured according to ISO178 (1993). Test pieces cut out in four directions of the +45° direction, the -45° direction, and the 90° direction when an optional direction was set to the 0° direction were prepared. The number of measurements for each direction was n = 3, and the arithmetic average value of the measurements was defined as the flexural modulus E (GPa). The specific flexural modulus of the porous material was calculated by substituting the obtained results and the density $\rho$ of the porous material into the following formula.

$$\text{Specific flexural modulus} = E^{1/3}/\rho$$

(7) Out-of-plane compression test of porous material

A test piece was cut out from the porous material, and the out-of-plane compressive modulus of the porous material was measured with reference to JIS K7220 (2006). The thickness of the porous material was 4 mm, the number of measurements was n = 3, and the arithmetic average value was defined as the out-of-plane compressive modulus (MPa).

(8) Material of test specimen

[Carbon fiber 1 (CF1)]

A copolymer containing polyacrylonitrile as a main component was subjected to spinning, a calcination process, and a surface oxidation treatment to obtain a continuous carbon fiber. In the calcination process, the oxidized fiber bundle was subjected to a twisting treatment. In this carbon fiber, 95% of single filaments had a curved shape even after being untwisted, due to application of the twisting treatment during the calcination process, the diameter of the single filament was 7 $\mu$m, and the density was 1.8 $g/cm^3$.

[Carbon fiber 2 (CF2)]

A continuous carbon fiber was obtained by performing the same treatment as the carbon fiber 1 except that the number of twists in the twisting treatment was 1.8 times that of the carbon fiber 1. In the carbon fiber 2, 95% of single filaments had a curved shape, the diameter of the single filament was 7 $\mu$m, and the density was 1.8 g/cm$^3$.

[Carbon fiber 3 (CF3)]

A continuous carbon fiber was obtained by performing the same treatment as the carbon fiber 1 except that the number of twists in the twisting treatment was 2.4 times that of the carbon fiber 1. In the carbon fiber 3, 95% of single filaments had a curved shape, the diameter of the single filament was 7 $\mu$m, and the density was 1.8 g/cm$^3$.

[Carbon fiber 4 (CF4)]

A continuous carbon fiber was obtained by performing the same treatment as the carbon fiber 1 except that the number of twists in the twisting treatment was 4.0 times that of the carbon fiber 1. In the carbon fiber 4, 95% of single filaments had a curved shape, the diameter of the single filament was 7 $\mu$m, and the density was 1.8 g/cm$^3$.

[Carbon fiber 5 (CF5)]

A continuous carbon fiber was obtained by performing the same treatment as the carbon fiber 1 except that the number of twists in the twisting treatment was 6.0 times that of the carbon fiber 1. In the carbon fiber 5, 95% of single filaments had a curved shape, the diameter of the single filament was 7 $\mu$m, and the density was 1.8 g/cm$^3$.

[Carbon fiber 6 (CF6)]

A continuous carbon fiber was obtained by performing the same treatment as the carbon fiber 1 except that the twisting treatment was not performed. In the carbon fiber 6, 100% of single filaments had a linear shape, the diameter of the single filament was 7 $\mu$m, and the density was 1.8 g/cm$^3$.

[Resin sheet 1]

A resin sheet containing 80 mass% of an unmodified polypropylene resin ("Prime Polypro" (registered trademark) J105G manufactured by Prime Polymer Co., Ltd.) and 20 mass% of an acid-modified polypropylene resin ("ADMER" QB510 manufactured by Mitsui Chemicals, Inc.) and having a basis weight of 200 g/m$^2$ was prepared. The obtained resin sheet had a density of 0.92 g/cm$^3$ and a melting point of 165°C.

[Resin sheet 2]

A resin sheet 2 containing polyether ketone ketone ("Kepstan" (registered trademark) 6003 manufactured by Arkema S.A.) and having a basis weight of 200 g/m$^2$ was prepared. The melting point of the obtained resin sheet 2 was 305°C.

[Resin Sheet 3]

In a kneader, 30 parts by mass of "jER" (registered trademark) 828 (manufactured by Mitsubishi Chemical Corporation), 35 parts by mass of "jER" (registered trademark) 1001, and 35 parts by mass of "jER" (registered trademark) 154 were charged, and the mixture was heated to 150°C while being kneaded, and then kneaded at 150°C for 1 hour to give a transparent viscous liquid. The viscous liquid was cooled to 60°C while being kneaded, then 3.7 parts by mass of DYCY7 (manufactured by Mitsubishi Chemical Corporation) as a curing agent, 3 parts by mass of DCMU99 (manufactured by Hodogaya Chemical Co., Ltd.) as a curing accelerator, and 3 parts by mass of "Matsumoto Microsphere" (registered trademark) M (manufactured by Matsumoto Yushi-Seiyaku Co., Ltd.) as particles were blended therein, and the blend was kneaded at 60°C for 30 minutes to prepare an epoxy resin composition. A resin sheet 3 containing the epoxy resin composition and having a basis weight of 150 g/m$^2$ was prepared. The curing temperature of the obtained resin sheet 3 was 165°C.

[Fiber mat 1 (M1)]

A fiber bundle of the carbon fiber 1 was cut into 6 mm to obtain a chopped carbon fiber 1. A dispersion containing water and a surfactant (polyoxyethylene lauryl ether (trade name) manufactured by NACALAI TESQUE, INC.) and having a concentration of 0.1 mass% was prepared, and a fiber mat was produced using the dispersion and the chopped carbon fiber 1. The apparatus for producing a fiber mat includes a cylindrical container having a diameter of 1,000 mm, and an opening cock at the lower part of the container as a dispersion tank. A stirrer is attached to an opening on an upper surface of the dispersion tank, and the chopped carbon fiber 1 and the dispersion can be charged from the opening. A 1 mass% emulsion of a (meth)acrylic polymer was sprayed onto the papermaking substrate from the upper surface thereof, the papermaking substrate was dried in a drying furnace at 200°C for 30 minutes to obtain webs, and the obtained webs were stacked to obtain a fiber mat 1. The basis weight of the fiber mat 1 was 100 g/m$^2$.

[Fiber mat 2 (M2)]

A fiber mat 2 was obtained in the same manner as in the fiber mat 1 except that the carbon fiber 1 in the fiber mat 1 was changed to the carbon fiber 2. The basis weight of the fiber mat 2 was 100 g/m$^2$.

[Fiber mat 3 (M3)]

A fiber mat 3 was obtained in the same manner as in the fiber mat 1 except that the carbon fiber 1 in the fiber mat 1 was changed to the carbon fiber 3. The basis weight of the fiber mat 3 was 100 g/m$^2$.

[Fiber mat 4 (M4)]

A fiber mat 4 was obtained in the same manner as in the fiber mat 1 except that the carbon fiber 1 in the fiber mat 1 was changed to the carbon fiber 4. The basis weight of the fiber mat 4 was 100 g/m$^2$.

[Fiber mat 5 (M5)]

A fiber mat 5 was obtained in the same manner as in the fiber mat 1 except that the carbon fiber 1 in the fiber mat 1 was changed to the carbon fiber 5. The basis weight of the fiber mat 5 was 100 g/m$^2$.

[Fiber mat 6 (M6)]

A fiber bundle of the carbon fiber 5 was cut into 6 mm to obtain a chopped carbon fiber 5. The chopped carbon fiber 5 was opened by an opener, and then aligned by a carding machine to obtain a fiber mat 6. The basis weight of the fiber mat 6 was 100 g/m$^2$.

[Fiber mat 7 (M7)]

A fiber mat 7 was obtained in the same manner as in the fiber mat 1 except that the carbon fiber 1 in the fiber mat 1 was changed to the carbon fiber 5, and only a carbon fiber having a curved portion was taken out from the chopped carbon fiber 5 and charged into a fiber mat production apparatus. The basis weight of the fiber mat 7 in which only the carbon fiber having a curved portion was taken out was 100 g/m$^2$.

[Fiber mat 8 (M8)]

A fiber mat 8 was obtained in the same manner as in the fiber mat 5 except that a chopped carbon fiber 6 was charged into the dispersion tank in addition to the chopped carbon fiber 5 in the fiber mat 5. The fiber mat 8 contains 34 mass% of carbon fibers having a curved portion and 66 mass% of linear carbon fibers. The basis weight of the fiber mat 8 was 100 g/m$^2$.

[Fiber mat 9 (M9)]

A fiber mat 9 was obtained in the same manner as in the fiber mat 5 except that the 1 mass% emulsion of the (meth)acrylic polymer in the fiber mat 5 was changed to polyetherimide (PEI). The basis weight of the fiber mat 9 was 100 g/m$^2$.

[Fiber mat 10 (M10)]

Crimped yarns obtained by passing PAN-based flame-resistant yarns through a push-in type crimper were cut into 6 mm, and the cut yarns were formed into a web sheet using a card and a crosslapper. Then, the sheet was needle-punched at a needling density of 200 needles/cm$^2$ using single barb needles to obtain a PAN-based flame-resistant yarn nonwoven fabric. The nonwoven fabric was heated to a temperature of 1,500°C in a nitrogen atmosphere and fired, then immersed in an ammonium hydrogen carbonate aqueous solution (0.1 mol/liter), subjected to electrolytic oxidation with an electric quantity of 76 coulombs/g, washed with water, and dried to obtain a fiber mat 10. The basis weight of the fiber mat 10 was 100 g/m$^2$.

[Fiber mat 11 (M11)]

A fiber mat 11 was obtained in the same manner as in the fiber mat 10 except that the crimped yarn was cut into 50 mm. The basis weight of the fiber mat 11 was 100 g/m$^2$.

[Fiber mat 12 (M12)]

A fiber mat 12 was obtained in the same manner as in the fiber mat 5 except that the carbon fiber 5 in the fiber mat 5 was cut into 1 mm. The basis weight of the fiber mat 12 was 100 g/m$^2$.

[Fiber mat 13 (M13)]

A fiber mat 13 was obtained in the same manner as in the fiber mat 5 except that the carbon fiber 5 in the fiber mat 5 was cut into 0.5 mm. The basis weight of the fiber mat 14 was 100 g/m$^2$.

[Fiber mat 14 (M14)]

A fiber mat 14 was obtained in the same manner as in the fiber mat 5 except that the carbon fiber 5 in the fiber mat 5 partially includes a fiber bundle having the initial thickness. The basis weight of the fiber mat 14 was 100 g/m$^2$.

[Fiber mat 15 (M15)]

A fiber mat 15 was obtained in the same manner as in the fiber mat 1 except that the carbon fiber 1 in the fiber mat 1 was changed to the carbon fiber 6. The basis weight of the fiber mat 15 was 100 g/m$^2$.

[Example 1]

A laminate was prepared in which the fiber mat 1 and the resin sheet 1 were disposed in the order of [resin sheet 1/fiber mat 1/resin sheet 1/fiber mat 1/resin sheet 1/fiber mat 1/resin sheet 1/fiber mat 1/resin sheet 1/fiber mat 1]. Subsequently, a molding base material was obtained through the following steps (A) to (C).

(A) The laminate is disposed in a press-molding mold cavity preheated to 200°C, and the mold is closed.
(B) The mold is held with a pressure of 3 MPa applied for 5 minutes, and then the mold is cooled to a cavity temperature of 50°C while the pressure is held.
(C) The mold is opened, and the molding base material is taken out.
Thereafter, a porous material was obtained through the following steps (D) to (F). The properties of the carbon fiber used and the properties of the resulting molding base material and porous material are shown in Table 1. The molding base material was highly expandable as compared with Comparative Example 1.
(D) The molding base material is disposed in the same press-molding mold cavity as in (A) preheated to 200°C, the mold is fastened and held for 5 minutes, the mold is then opened, and a metal spacer is inserted at the end of the mold to adjust the thickness of the molded article to 4.0 mm.
(E) The mold cavity is closely closed again, and the mold is cooled to a cavity temperature of 50°C while the pressure is held.
(F) The mold is opened, and the porous material is taken out.

[Example 2]

A molding base material and a porous material were obtained by performing the same steps as in Example 1 except that the fiber mat 1 was changed to the fiber mat 2. The properties of the carbon fiber used and the properties of the resulting molding base material and porous material are shown in Table 1. The molding base material was highly expandable as compared with Comparative Example 1, and there was almost no difference in expandability from Example 1.

[Example 3]

A molding base material and a porous material were obtained by performing the same steps as in Example 1 except that the fiber mat 1 was changed to the fiber mat 3. The properties of the carbon fiber used and the properties of the resulting molding base material and porous material are shown in Table 1. The molding base material was highly expandable as compared with Comparative Example 1, and there was almost no difference in expandability from Example 1.

[Example 4]

A molding base material and a porous material were obtained by performing the same steps as in Example 1 except that the fiber mat 1 was changed to the fiber mat 4. The characteristics of the obtained molding base material and porous material are shown in Table 1. The expandability was significantly improved as compared with Examples 1 to 3.

[Example 5]

A molding base material and a porous material were obtained by performing the same steps as in Example 1 except that the fiber mat 1 was changed to the fiber mat 5. The properties of the carbon fiber used and the properties of the resulting molding base material and porous material are shown in Table 1. The expandability was significantly improved as compared with Examples 1 to 4.

[Example 6]

A molding base material and a porous material were obtained by performing the same steps as in Example 1 except that the fiber mat 1 was changed to the fiber mat 6. The properties of the carbon fiber used and the properties of the resulting molding base material and porous material are shown in Table 1.

[Example 7]

A molding base material and a porous material were obtained by performing the same steps as in Example 1 except that the fiber mat 1 was changed to the fiber mat 7. The properties of the carbon fiber used and the properties of the resulting molding base material and porous material are shown in Table 1.

[Example 8]

A molding base material and a porous material were obtained by performing the same steps as in Example 1 except that the fiber mat 1 was changed to the fiber mat 8. The properties of the carbon fiber used and the properties of the resulting molding base material and porous material are shown in Table 1.

[Example 9]

A molding base material and a porous material were obtained by performing the same steps as in Example 1 except that the fiber mat 1 was changed to the fiber mat 9. The properties of the carbon fiber used and the properties of the resulting molding base material and porous material are shown in Table 1.

[Example 10]

A molding base material and a porous material were obtained by performing the same steps as in Example 1 except that the fiber mat 1 was changed to the fiber mat 10. The properties of the carbon fiber used and the properties of the resulting molding base material and porous material are shown in Table 1.

[Example 11]

A molding base material and a porous material were obtained by performing the same steps as in Example 1 except that the fiber mat 1 was changed to the fiber mat 11. The properties of the carbon fiber used and the properties of the resulting molding base material and porous material are shown in Table 1.

[Example 12]

A molding base material and a porous material were obtained by performing the same steps as in Example 1 except that the fiber mat 1 was changed to the fiber mat 12. The properties of the carbon fiber used and the properties of the resulting molding base material and porous material are shown in Table 1.

[Example 13]

A molding base material and a porous material were obtained by performing the same steps as in Example 1 except that the fiber mat 1 was changed to the fiber mat 13. The properties of the carbon fiber used and the properties of the resulting molding base material and porous material are shown in Table 1.

[Example 14]

A molding base material and a porous material were obtained by performing the same steps as in Example 1 except that the fiber mat 1 was changed to the fiber mat 14. The characteristics of the obtained molding base material and porous material are shown in Table 1.

[Example 15]

A molding base material and a porous material were obtained by performing the same steps as in Example 1 except that the fiber mat 5 and the resin sheet 1 were disposed in the order of [fiber mat 5/fiber mat 5/resin sheet 1/fiber mat 5/fiber mat 5/fiber mat 5/fiber mat 5/resin sheet 1/fiber mat 5/fiber mat 5/fiber mat 5/fiber mat 5/resin sheet 1/fiber mat 5/fiber mat 5]. The properties of the carbon fiber used and the properties of the resulting molding base material and porous material are shown in Table 1.

[Example 16]

A molding base material and a porous material were obtained by performing the same steps as in Example 1 except that the fiber mat 1 was changed to the fiber mat 5 and the resin sheet 1 was changed to the resin sheet 2. The properties of the carbon fiber used and the properties of the resulting molding base material and porous material are shown in Table 1.

[Example 17]

A molding base material was obtained by changing the fiber mat 1 to the fiber mat 5 and changing the resin sheet 1 to the resin sheet 3 and performing the following steps (A) to (C).

(A) The laminate is disposed in a press-molding mold cavity preheated to 60°C, and the mold is closed.
(B) The mold is held with a pressure of 5 MPa applied for 90 minutes.
(C) The mold is opened, and the molding base material is taken out.
Thereafter, a porous material was obtained through the following steps (D) to (F). The properties of the carbon fiber used and the properties of the resulting molding base material and porous material are shown in Table 1.
(D) The molding base material is disposed in a press-molding mold cavity preheated to 60°C, the mold is held with a pressure of 5 MPa applied for 5 minutes, the mold is then opened, and a metal spacer is inserted at the end of the mold to adjust the thickness of the porous material to 4.0 mm.
(E) The mold cavity is closely closed again, the mold is heated to 150°C while the pressure is held, and then curing is performed for 90 minutes.
(F) The mold is opened, and the porous material is taken out.

[Comparative Example 1]

A molding base material and a porous material were obtained by performing the same steps as in Example 1 except that the fiber mat 1 was changed to the fiber mat 15. The properties of the carbon fiber used and the properties of the resulting molding base material and porous material are shown in Table 1.

Comparisons of the above examples are shown. In Examples 1 to 3, since the discontinuous carbon fiber having a curved portion was used, the molding base material had higher expandability than that of Comparative Example 1, and there was almost no difference in expandability between Examples 1 to 3. In Examples 4 and 5, since the radius of curvature, the curvature, and the undulation width of the discontinuous carbon fiber were large, expandability was significantly improved as compared with Examples 1 to 3. When a comparison was made between Example 5 and Example 6, Example 5 had a smaller bulk density and exhibited high expandability. When a comparison was made between Example 5 and Example 7 in which the linear discontinuous reinforcing fiber was not contained, Example 5 exhibited higher expandability. When a comparison was made between Example 5 and Example 8 in which a large amount of linear discontinuous reinforcing fiber was contained, the expandability of Example 5 was significantly improved. When a comparison was made between Example 5 and Example 9 in which the glass transition temperature of the binder component was higher than the melting point of the matrix resin, the expandability of Example 5 was significantly improved. When a comparison was made between Example 5 and Example 10 produced by needle punching, Example 5 had a smaller bulk density and exhibited high expandability. When a comparison was made between Example 10 and Example 11 in which a longer fiber was used, Example 10 exhibited higher expandability. When a comparison was made between Example 5 and Example 12 in which the distance between two ends was large, Example 5 exhibited higher expandability. When a comparison was made between Example 5 and Example 14 in which the ratio of discontinuous carbon fibers dispersed in the form of a single yarn was small, Example 5 exhibited higher expandability and reduced variation in expandability. When a comparison was made between Example 5 and Example 15 in which the content of the discontinuous carbon fiber was high, the mechanical characteristics such as the out-of-plane compressive modulus and the specific flexural modulus were improved in Example 5. Example 16 in which PEKK as a highly heat-resistant resin was used as a matrix resin and Example 17 in which an epoxy resin as a thermosetting resin was used as a matrix resin exhibited high expandability equivalent to that of Example 5.

Table 1

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Configuration of molding base material | Carbon fiber (A) having curved portion | - | CF1 | CF2 | CF3 | CF4 | CF5 | CF5 | CF5 | CF5 | CF5 | Crimped yarn |
| | Fiber mat | - | M1 | M2 | M3 | M4 | M5 | M6 | M7 | M8 | M9 | M10 |
| | Matrix resin (B) | - | PP | PP | PP | PP | PP | PP | PP | PP | PP | PP |
| | Linear discontinuous reinforcing fiber (C) | - | CF1 | CF2 | CF3 | CF4 | CF5 | CF5 | - | CF5+CF6 | CF5 | - |
| | Binder component (D) | - | Acryl | Acryl | Acryl | Acryl | Acryl | Acryl | Acryl | Acryl | PEI | Acryl |
| | Content of carbon fiber (A) | mass% | 33 | 33 | 33 | 33 | 33 | 33 | 33 | 13 | 33 | 33 |
| | Content of matrix resin (B) | mass% | 67 | 67 | 67 | 67 | 67 | 67 | 67 | 87 | 67 | 67 |
| | Reinforcing fiber (C)/(carbon fiber (A) + reinforcing fiber (C)) | % | 5 | 5 | 5 | 5 | 5 | 5 | 0 | 66 | 5 | 0 |

EP 4 488 319 A1

18

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Carbon fiber (A) having curved portion | Number of twist | - | 1 | 1.8 | 2.4 | 4 | 6 | 6 | 6 | 6 | 6 | - |
| | Radius of curvature of curved portion | mm | 20 | 11 | 8 | 4 | 2 | 2 | 2 | 2 | 2 | 2 |
| | Curvature | % | 0.07 | 0.20 | 0.42 | 1.90 | 8.53 | 8.53 | 8.53 | 8.53 | 8.53 | 2.30 |
| | Undulation width | μm | 32 | 5.7 | 6.5 | 13.8 | 20 | 20 | 20 | 20 | 20 | 11.2 |
| | Distance between two ends | mm | 6 | 6 | 6 | 6 | 6 | 6 | 6 | 6 | 6 | 6 |
| | Aspect ratio | - | 858 | 859 | 861 | 873 | 930 | 930 | 930 | 930 | 930 | 877 |
| | Single yarn dispersion ratio | % | 98 | 99 | 97 | 96 | 97 | 97 | 97 | 97 | 97 | 97 |
| | Average two-dimensional orientation angle | ° | 44 | 43 | 43 | 44 | 46 | 46 | 46 | 46 | 46 | 46 |
| Binder component (D) | Glass transition temperature Tg of binder component (D) - melting point Tm of matrix resin (B) | °C | -105 | -105 | -105 | -105 | -105 | - | -105 | -105 | 51 | - |

EP 4 488 319 A1

19

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Properties of molding base material | Expansion ratio | Time | 6 | 6 | 6 | 20 | 50 | 8 | 40 | 8 | 6 | 9 |
| | Bulk density | g/cm$^3$ | 0.010 | 0.010 | 0.010 | 0.003 | 0.002 | 0.008 | 0.002 | 0.008 | 0.002 | 0.100 |
| | Coefficient of variation of thickness at three-time expansion | % | 1 | 2 | 1 | 1 | 1 | 1 | 1 | 2 | 2 | 15 |
| | Variation in length of molding base material | Time | 1 | 1 | 1 | 1 | 1 | 1 | 1 | 1 | 1 | 1.5 |
| Properties of porous material | Out-of-plane compressive modulus | MPa | 30 | 30 | 30 | 30 | 32 | 30 | 30 | 30 | 30 | 30 |
| | Specific flexural modulus | GPa$^{1/3}$·cm$^3$/g | 5 | 5 | 5 | 5 | 5 | 5 | 5 | 5 | 5 | 4 |

Table 2

| | | Unit | Example 11 | Example 12 | Example 13 | Example 14 | Example 15 | Example 16 | Example 17 | Comparative Example 1 |
|---|---|---|---|---|---|---|---|---|---|---|
| Configuration of molding base material | Carbon fiber (A) having curved portion | - | Crimped yarn | CF5 | CF5 | CF5 | CF5 | CF5 | CF5 | - |
| | Fiber mat | - | M11 | M12 | M13 | M14 | M5 | M5 | M5 | M6 |
| | Matrix resin (B) | - | PP | PP | PP | PP | PP | PEKK | EP | PP |
| | Linear discontinuous reinforcing fiber (C) | - | - | CF5 | CF5 | CF5 | CF5 | CF5 | CF5 | CF6 |
| | Binder component (D) | - | Acryl | Acryl | Acryl | Acryl | Acryl | Acryl | Acryl | Acryl |
| | Content of carbon fiber (A) | mass% | 33 | 33 | 33 | 33 | 67 | 33 | 33 | 0 |
| | Content of matrix resin (B) | mass% | 67 | 67 | 67 | 67 | 33 | 67 | 67 | 67 |
| | Reinforcing fiber (C)/(carbon fiber (A) + reinforcing fiber (C)) | % | 0 | 5 | 5 | 5 | 5 | 5 | 5 | 100 |
| Carbon fiber (A) having curved portion | Number of twist | - | - | 6 | 6 | 6 | 6 | 6 | 6 | 0 |
| | Radius of curvature of curved portion | mm | 2 | 2 | 2 | 2 | 2 | 2 | 2 | - |
| | Curvature | % | 2.30 | 8.53 | 8.53 | 8.53 | 8.53 | 8.53 | 8.53 | 001 |
| | Undulation width | μm | 11.2 | 20 | 20 | 20 | 20 | 20 | 20 | 0.6 |
| | Distance between two ends | mm | 50 | 12 | 50 | 6 | 6 | 6 | 6 | 6 |
| | Aspect ratio | - | 7307 | 1861 | 7752 | 930 | 930 | 930 | 930 | 857 |
| | Single yarn dispersion ratio | % | 97 | 97 | 97 | 43 | 96 | 97 | 97 | 97 |
| | Average two-dimensional orientation angle | ° | 46 | 43 | 46 | 38 | 44 | 46 | 46 | 43 |
| Binder component (D) | Glass transition temperature Tg of binder component (D) - melting point Tm of matrix resin (B) | °C | - | -105 | -105 | -105 | -105 | -270 | -105 | -105 |

(continued)

| | | Unit | Example 11 | Example 12 | Example 13 | Example 14 | Example 15 | Example 16 | Example 17 | Comparative Example 1 |
|---|---|---|---|---|---|---|---|---|---|---|
| Properties of molding base material | Expansion ratio | Time | 6 | 42 | 6 | 20 | 70 | 45 | 50 | 5 |
| | Bulk density | g/cm$^3$ | 0.050 | 0.003 | 0.011 | 0.003 | 0.002 | 0.002 | 0.002 | 0.010 |
| | Coefficient of variation of thickness at three-time expansion | % | 17 | 2 | 2 | 5 | 1 | 1 | 1 | 1 |
| | Variation in length of molding base material | Time | 16 | 1 | 1 | 1 | 1 | 1 | 1 | 1 |
| Properties of porous material | Out-of-plane compressive modulus | MPa | 30 | 25 | 20 | 30 | 5 | 30 | 30 | 30 |
| | Specific flexural modulus | GPa$^{1/3}$·cm$^3$/g | 4 | 4 | 5 | 5 | 2 | 7 | 7 | 5 |

Reference Signs List

1 MOLDING BASE MATERIAL CONTAINING NO CARBON FIBER HAVING CURVED PORTION
2 LINEAR CARBON FIBER
3 MATRIX RESIN
4 POROUS MATERIAL CONTAINING NO CARBON FIBER HAVING CURVED PORTION
5 VOID
6 MOLDING BASE MATERIAL CONTAINING CARBON FIBER HAVING CURVED PORTION
7 CARBON FIBER HAVING CURVED PORTION
8 POROUS MATERIAL CONTAINING CARBON FIBER HAVING CURVED PORTION
9 SINGLE FILAMENT HAVING CURVED PORTION
10a END 1 OF SINGLE FILAMENT 9
10b END 2 OF SINGLE FILAMENT 9
r DISTANCE BETWEEN TWO ENDS OF SINGLE FILAMENT 9
l FIBER LENGTH OF SINGLE FILAMENT 9
11 BRANCHED SINGLE FILAMENT HAVING CURVED PORTION
12a END 1 OF SINGLE FILAMENT 11
12b END 2 OF SINGLE FILAMENT 11
12c END 3 OF SINGLE FILAMENT 11
r1 DISTANCE 1 BETWEEN TWO ENDS OF SINGLE FILAMENT 11
r2 DISTANCE 2 BETWEEN TWO ENDS OF SINGLE FILAMENT 11
r3 DISTANCE 3 BETWEEN TWO ENDS OF SINGLE FILAMENT 11
13 PROJECTION IMAGE OF SINGLE FILAMENT OF CURVED CARBON FIBER ON HORIZONTAL PLANE
14a START POINT OF PROJECTION IMAGE 13
14b END POINT OF PROJECTION IMAGE 13

## Claims

1. A molding base material comprising: a discontinuous reinforcing fiber; and a matrix resin, wherein the molding base material contains a discontinuous carbon fiber having a curved portion as the discontinuous reinforcing fiber, and the molding base material has expandability in a thickness direction at a glass transition temperature or a melting point of the matrix resin.

2. The molding base material according to claim 1, wherein the curved portion of the discontinuous carbon fiber having the curved portion has a radius of curvature of 10 mm or less.

3. The molding base material according to claim 1 or 2, wherein an overall curvature of the discontinuous carbon fiber having the curved portion is 1 to 200%.

4. The molding base material according to claim 1 or 2, comprising the discontinuous reinforcing fiber in a papermaking form.

5. The molding base material according to claim 1 or 2, wherein an undulation width of a fiber axis of the discontinuous carbon fiber having the curved portion within a range of a linear distance of 1 mm is 10 to 1,000 $\mu$m.

6. The molding base material according to claim 1 or 2, wherein a bulk density of an assembly of the discontinuous reinforcing fiber remaining after the molding base material is heat-treated at 500°C for 3 hours in a nitrogen atmosphere is 0.005 g/cm$^3$ or less.

7. The molding base material according to claim 1 or 2, comprising 50 to 99% of the discontinuous carbon fiber having the curved portion, and further comprising 1 to 50% of a linear discontinuous reinforcing fiber.

8. The molding base material according to claim 1 or 2, wherein a contact point between the discontinuous reinforcing fibers is coated with a binder component, and a glass transition temperature of the binder component is lower than the melting point of the matrix resin.

9. The molding base material according to claim 1 or 2, wherein a thickness of the molding base material at the glass transition temperature or the melting point of the matrix resin is three times or more a thickness of the molding base material at room temperature.

10. The molding base material according to claim 9, wherein a coefficient of variation of a thickness of the molding base material at three-time expansion at room temperature is 0 to 10%.

11. The molding base material according to claim 1 or 2, wherein a length of the molding base material at the glass transition temperature or the melting point of the matrix resin is 0.9 to 1.2 times a length of the molding base material at room temperature.

12. The molding base material according to claim 1 or 2, wherein a distance between two ends of the discontinuous carbon fiber having the curved portion is 2 to 10 mm.

13. The molding base material according to claim 1 or 2, wherein an aspect ratio (l/d) between a fiber length (l) and a diameter (d) of the discontinuous carbon fiber having the curved portion is 100 to 5,000.

14. The molding base material according to claim 1 or 2, comprising 5 to 65 parts by mass of the discontinuous reinforcing fiber and 35 to 95 parts by mass of the matrix resin.

15. The molding base material according to claim 1 or 2, wherein the matrix resin is at least one thermoplastic resin selected from polyolefin, polyamide, polyarylene sulfide, polyether ether ketone, polyether ketone ketone, polycarbonate, and polyetherimide, or at least one thermosetting resin selected from unsaturated polyester, vinyl ester, an epoxy resin, a phenol resin, a urea resin, a melamine resin, and thermosetting polyimide.

16. A fiber-reinforced resin porous material comprising: a discontinuous reinforcing fiber; and a matrix resin, wherein the fiber-reinforced resin porous material contains a discontinuous carbon fiber having a curved portion as the discontinuous reinforcing fiber.

17. The porous material according to claim 16, wherein the porous material has expandability in a thickness direction at a glass transition temperature or a melting point of the matrix resin.

18. A skin-core structure comprising: the porous material according to claim 16 or 17 as a core layer; and a skin layer disposed on at least one surface of the core layer.

19. The skin-core structure according to claim 18, wherein the skin layer is a fiber-reinforced resin containing a continuous reinforcing fiber.

20. A structural member for an aircraft, a spacecraft, an automobile, a windmill, or an electronic device, the structural member comprising the porous material according to claim 16 or 17.

# FIG.1

# FIG.2

# FIG.3

# FIG.4

# FIG.5

(A)

9

l

10a     r     10b

(C)

9

l

10a   r   10b

(B)

9

r   10b

10a

l

EP 4 488 319 A1

# FIG.6

11

# FIG.7

13

## INTERNATIONAL SEARCH REPORT

| International application No. |
|---|
| **PCT/JP2023/006286** |

### A. CLASSIFICATION OF SUBJECT MATTER

*C08J 5/04*(2006.01)i; *D04H 1/4209*(2012.01)i; *D04H 1/4242*(2012.01)i; *D04H 1/64*(2012.01)i; *D01F 9/22*(2006.01)i
FI:   C08J5/04 CEZ; D04H1/4242; D04H1/64; D04H1/4209; D01F9/22

According to International Patent Classification (IPC) or to both national classification and IPC

### B. FIELDS SEARCHED

Minimum documentation searched (classification system followed by classification symbols)

B29B11/16; B29B15/08-15/14;B29C43/00-43/58; B29C44/00-44/60; B29C70/00-70/88; C08J5/04-5/10; C08J5/24; D04H1/00-18/04; D01F9/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 61-132663 A (ASAHI CHEMICAL INDUSTRIES CO., LTD.) 20 June 1986 (1986-06-20) claim 1, p. 4, upper left column, lines 14-19, p. 5, upper left column, lines 5-8, p. 5, upper right column, line 19 to lower left column, line 3, example 3 | 1-3, 5-6, 9, 12-15 |
| A | | 4, 7-8, 10-11, 16-20 |
| X | JP 2020-172031 A (TORAY INDUSTRIES, INC.) 22 October 2020 (2020-10-22) claims 1, 3, paragraphs [0002], [0003], [0006], [0051], example 1 | 16-17, 20 |
| Y | | 18-19 |
| A | | 1-15 |
| Y | JP 2014-004797 A (FUKUI PREFECTURE) 16 January 2014 (2014-01-16) claim 1, paragraph [0002] | 18-19 |
| A | | 1–17, 20 |
| A | JP 2021-195548 A (TORAY INDUSTRIES, INC.) 27 December 2021 (2021-12-27) claim 1, paragraph [0014] | 1-20 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2023/006286** |

**C.    DOCUMENTS CONSIDERED TO BE RELEVANT**

| Category* | Citation of document, with indication, where appropriate, of the relevant passages | Relevant to claim No. |
|---|---|---|
| A | JP 2012-116916 A (TORAY INDUSTRIES, INC.) 21 June 2012 (2012-06-21)<br>claim 1, paragraphs [0002], [0047], examples | 1-20 |
| A | WO 2013/073546 A1 (TORAY INDUSTRIES, INC.) 23 May 2013 (2013-05-23)<br>claims 1, 5, examples | 1-20 |
| A | WO 2012/114829 A1 (TORAY INDUSTRIES, INC.) 30 August 2012 (2012-08-30)<br>claim 1, examples, comparative examples 3, 4 | 1-20 |
| A | WO 2016/114244 A1 (EAGLE INDUSTRY CO., LTD.) 21 July 2016 (2016-07-21)<br>claims 1, 3, paragraph [0019] | 1-20 |
| A | WO 2017/110528 A1 (TORAY INDUSTRIES, INC.) 29 June 2017 (2017-06-29)<br>claim 1, examples | 1-20 |

Form PCT/ISA/210 (second sheet) (January 2015)

| | | | |
|---|---|---|---|
| **INTERNATIONAL SEARCH REPORT**<br>Information on patent family members | | International application No.<br><br>**PCT/JP2023/006286** | |

| Patent document<br>cited in search report | Publication date<br>(day/month/year) | Patent family member(s) | Publication date<br>(day/month/year) |
|---|---|---|---|
| JP 61-132663 A | 20 June 1986 | US 4816289 A<br>claim 1, paragraphs [0056],<br>[0060], [0109], [0112] | |
| JP 2020-172031 A | 22 October 2020 | (Family: none) | |
| JP 2014-004797 A | 16 January 2014 | (Family: none) | |
| JP 2021-195548 A | 27 December 2021 | (Family: none) | |
| JP 2012-116916 A | 21 June 2012 | (Family: none) | |
| WO 2013/073546 A1 | 23 May 2013 | US 2014/0303306 A1<br>claims 1, 5, examples | |
| WO 2012/114829 A1 | 30 August 2012 | US 2013/0323495 A1<br>claim 1, comparative examples<br>3, 4 | |
| WO 2016/114244 A1 | 21 July 2016 | US 2017/0362526 A1<br>claims 1, 3, paragraph [0054] | |
| WO 2017/110528 A1 | 29 June 2017 | US 2019/0002655 A1<br>claim 1, examples | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2017110528 A